# EUROPÄISCHE PATENTSCHRIFT

(11) **EP 1 910 430 B1**
(45) Veröffentlichungstag und Bekanntmachung des Hinweises auf die Patenterteilung: **30.09.2009**
(21) Anmeldenummer: 06762534.3
(22) Anmeldetag: 11.07.2006
(51) Int. Cl.: C08F 10/10, C08F 4/14

(54) **VERFAHREN ZUR HERSTELLUNG VON POLYISOBUTEN HOHER QUALITÄT**
METHOD FOR THE PRODUCTION OF HIGH-GRADE POLYISOBUTENE
PROCEDE DE PRODUCTION DE POLYISOBUTENE DE HAUTE QUALITE

(30) Priorität: 12.07.2005 DE 102005032440
(43) Veröffentlichungstag der Anmeldung: 16.04.2008
(73) Patentinhaber: BASF SE, 67056 Ludwigshafen (DE)
(72) Erfinder: BODE, Andreas, 68163 Mannheim (DE); RACHWALSKY, Uwe, 67071 Ludwigshafen (DE); SAUER, Friedrich, 67271 Obersülzen (DE); SCHAUSS, Eckard, 67259 Heuchelheim (DE); VOLLAND, Marco-Christian, 67141 Neuhofen (DE); WETTLING, Thomas, 67117 Limburgerhof (DE)
(74) Vertreter: Reitstötter - Kinzebach
(86) Internationale Anmeldenummer: PCT/EP2006/006786
(87) Internationale Veröffentlichungsnummer: WO 2007/006556

(56) Entgegenhaltungen:
- EP-A- 0 628 575
- EP-A- 1 256 560
- EP-A- 1 598 380
- WO-A-02/053601
- WO-A-03/004540
- DE-A1- 4 220 239
- US-A- 4 849 572

## Beschreibung

Die vorliegende Erfindung betrifft ein Verfahren zur Herstellung von Polyisobutenen, insbesondere hochreaktiver Polyisobutene und/oder von Polyisobutenen mit enger Molekulargewichtsverteilung.

Als hochreaktive Polyisobutene werden solche angesprochen, die einen hohen Gehalt an endständigen Methylidengruppen aufweisen. Unter Methylidengruppen werden im Sinne der vorliegenden Anmeldung solche Doppelbindungen verstanden, deren Lage im Polyisobutenmakromolekül durch die allgemeine Formel 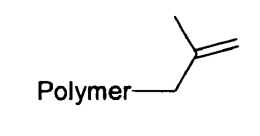 beschrieben wird, in der "Polymer" für den um eine Isobuteneinheit verkürzten Polyisobutenrest steht. Die Methylidengruppen zeigen die höchste Reaktivität, wohingegen die weiter im Inneren der Makromoleküle liegenden Doppelbindungen keine oder nur eine geringere Reaktivität bei Funktionalisierungsreaktionen zeigen. Hochreaktive Polyisobutene werden unter anderem als Zwischenprodukte zur Herstellung von Additiven für Schmier- und Kraftstoffe verwendet.

Derartige hochreaktive Polyisobutene sind z. B. nach dem Verfahren der EP 0 628 575 durch kationische Polymerisation von Isobuten in flüssiger Phase mit Hilfe von Bortrifluorid und eines sekundären Alkohols bei Temperaturen von 0 °C bis -60 °C erhältlich. Nach Erreichen des angestrebten Molekulargewichts wird der Polymerisationskatalysator deaktiviert und auf diese Weise die Polymerisation abgebrochen. Die EP 0 628 575 empfiehlt, den Reaktionsaustrag zu diesem Zweck in ein Medium, wie Wasser, Alkohole, Acetonitril, Ammoniak oder wässrige Lösungen von Mineralbasen, wie Alkalimetall- und Erdalkalimetallhydroxidlösungen, Lösungen von Carbonaten dieser Metalle, zu leiten.

Für die Herstellung hochreaktiver Polyisobutene und/oder von Polyisobutenen mit enger Molekulargewichtsverteilung ist es kritisch, dass nach Erreichen des angestrebten Molekulargewichts der Polymerisationskatalysator möglichst rasch und quantitativ deaktiviert wird, um eine Verbreiterung der Molekulargewichtsverteilung und Isomerisierungsreaktionen zu Polyisobutenmolekülen zu verhindern, bei denen die Doppelbindung eine thermodynamisch günstigere Position im Inneren des Moleküls einnimmt. Auf das Erfordernis eines unverzüglichen Reaktionsabbruches weist auch die US-A 4,849,572 hin.

Organische Abbruchmittel wie Acetonitril und Alkohole weisen den Vorteil auf, dass sie mit der organischen Reaktionsphase mischbar sind und daher in dieser leicht gleichmäßig verteilbar sind. Sie haben allerdings den Nachteil, dass ihre Affinität zum BF₃-Molekül vergleichsweise gering ist und sie daher nur zu einer schleichenden Katalysatordeaktivierung führen. Da sie außerdem als Phasenvermittler wirken können, erschweren sie die anschließende Extraktion mit Wasser zur Entfernung der Katalysatordeaktivierungsprodukte.

Wässrige Abbruchmittel, wie insbesondere Wasser selbst, haben den Vorteil, dass die Katalysatordeaktivierung und extraktive Entfernung der Katalysatordeaktivierungs- bzw. -hydrolyseprodukte gleichzeitig erfolgen kann. Nachteilig ist dabei allerdings, dass die wässrige Phase mit der organischen Reaktionsphase nicht mischbar ist und für die Katalysatordeaktivierung und die Abtrennung der Katalysatordeaktivierungsprodukte der Stofftransport an der Phasengrenzfläche geschwindigkeitsbestimmend ist. Selbst nachdem die organische Reaktionsphase mit einem wässrigen Abbruchmittel in Kontakt gebracht wurde, kann die Polymerisation noch unkontrolliert fortschreiten bzw. es können unerwünschte Isomerisierungen ablaufen. Eine unverzügliche vollständige Katalysatordeaktivierung und die gleichzeitige Überführung der Katalysatordeaktivierungsprodukte aus der organischen Reaktionsphase in die wässrige Phase sind daher maßgebend für die Qualität der erhaltenen Polymere, die sich durch eine enge Molekulargewichtsverteilung, einen geringen Gehalt an Nebenkomponenten, insbesondere an fluorhaltigen Nebenkomponenten, und/oder einen hohen Anteil an endständigen Methylidengruppen auszeichnet. Die Abscheidung der mit Deaktivierungsprodukten beladenen wässrigen Phase beeinflusst die, Wirtschaftlichkeit des Verfahrens.

Die WO 02/053601 empfiehlt, die Reaktionsphase in zwei Stufen mit Wasser zu versetzen.

Der vorliegenden Erfindung liegt die Aufgabe zugrunde, ein wirtschaftliches Verfahren zur Herstellung von Polyisobutenen bereitzustellen, die eine enge Molekulargewichtsverteilung (niedrige Dispersität), einen geringen Gehalt an Nebenkomponenten, insbesondere an fluorhaltigen Nebenkomponenten, und/oder einen hohen Anteil an endständigen Methylidengruppen aufweisen.

Erfindungsgemäß wird diese Aufgabe durch ein Verfahren zur Herstellung von Polyisobutenen gelöst, bei dem man
a) Isobuten in Gegenwart eines Lewissäure-Katalysators in flüssiger organischer Phase polymerisiert,
b) die organische Phase zum Reaktionsabbruch in einem dynamischen Mischer mit einem wässrigen Abbruchmittel versetzt, der eine aus einer Umfangswand und zwei Stirnwänden gebildete, rotationssymmetrische Mischkammer und einen darin drehangetriebenen Mischrotor aufweist, wobei man die organische Phase über eine erste in der Umfangswand vorgesehene Einlassöffnung und das wässrige Abbruchmittel über eine zweite in der Umfangswand vorgesehene Einlassöffnung einführt, und
c) über eine in der Umfangswand vorgesehene Auslassöffnung ein fein dispergiertes Gemisch der organischen Phase und des Abbruchmittels abzieht und einer Phasentrennung zuführt.

Mit dieser Verfahrensweise erfolgt eine sehr schnelle homogene Dispergierung des gesamten Abbruchmittels in der organischen Reaktionsphase, wodurch eine nahezu schlagartige quantitative und gleichmäßige Katalysatordeaktivierung in einem Schritt gelingt und gleichzeitig die Katalysatordeaktivierungsprodukte nahezu vollständig in die Wasserphase überführt werden. Die so erhaltene Dispersion kann wirtschaftlich in einem nachgeschalteten Phasentrenngefäß (Beruhigungszone) im Erdschwerefeld getrennt werden, so dass beide Phase in zusammenhängender Form und weitgehend fremdphasenfrei übereinander geschichtet vorliegen.

Vorteilhafterweise ist die Drehzahl des drehangetriebenen Mischrotors regulierbar, um auch bei schwankender Produktionslast reproduzierbare und gleichbleibende Eigenschaften des Polyisobutens zu erreichen.

In einer besonders bevorzugten Ausführungsform beträgt die mittlere Verweilzeit der organischen Phase im dynamischen Mischer weniger als 10 Sekunden, vorzugsweise weniger als 2 Sekunden.

Der dynamische Mischer weist eine rotationssymmetrische Mischkammer auf, die aus einer Umfangswand und zwei Stirnwänden gebildet ist, wobei in der Umfangswand mindestens zwei Eintrittsöffnung vorgesehen sind. In der Mischkammer rotiert ein scheibenförmiger Mischrotor, der vorzugsweise an seinem Umfang gleichmäßig verteilte Kantenbrüche oder Schaufeln aufweist.

Durch eine erste Eintrittsöffnung wird die organische Reaktionsphase, und durch eine zweite Eintrittsöffnung, die vorzugsweise in Drehrichtung des Rotors versetzt angeordnet ist, das gesamte Abbruchmittel einspeist. Über eine Austrittsöffnung an der Umfangswand wird das Gemisch als Dispersion ausgetragen. Zunächst bildet sich infolge der durch den Mischrotor erzeugten Fliehkräfte ein Flüssigkeitsring im Bereich der Umfangswand der Mischkammer. Zwischen der Auslassöffnung und den Einlassöffnungen befindet sich ein Unterbrecher, um eine Rückförderung zum Einlass zu verhindern.

In bevorzugten Ausführungsformen weist der Mischrotor an seinen Stirnseiten Ausnehmungen auf, die durch radiale Stege voneinander getrennt sind, und die Mischkammer weist an ihren Stirnwänden ringförmige Kanäle auf, die die Ausnehmungen in den gegenüberliegenden Stirnwänden des Mischrotors überlappen. Die Ausnehmungen bilden mit den ringförmigen Kanälen in den Stirnwänden der Mischkammer Druckzellen, die strömungstechnisch miteinander verbunden sind.

Durch stetige Druckzunahme in der Mischkammer wird Flüssigkeit in die Druckzellen gedrängt und verdichtet, wobei eine kräftige Turbulenz erzeugt und der Mischrotor überspült wird. Die sich einstellende Zirkulationsströmung führt in wechselseitiger Folge zum Austausch des schneller umlaufenden Flüssigkeitsinhalts der Druckzellen mit dem langsam fließenden Flüssigkeitsring im Bereich der Umfangswand. Bei diesem Vorgang erfolgt eine Energieübertragung durch Impulsaustausch und die Turbulenz wird weiter verstärkt. Aufgrund dieses intensiven Flüssigkeitsaustausches entsteht eine besonders homogene Dispersion, welche nachfolgend kontinuierlich aus der Auslassöffnung in der Umfangswand der Mischkammer austritt.

Eine besonders bevorzugter dynamischer Mischer, der sich zur Anwendung im erfinderischen Verfahren eignet, ist in der DE-A 42 20 239 beschrieben, auf die vollinhaltlich Bezug genommen wird. Überraschend war, dass mit diesem Mischer, der bestimmungsgemäß zum Herstellen eines flüssigen, gegebenenfalls gasförmige Bestandteile enthaltenden Gemisches eingesetzt wird, auch die der Erfindung zugrunde liegende Aufgabe gelöst werden konnte.

Eine besonders vorteilhafte Ausführung der Eintrittsöffnungen ist, dass diese in Richtung Mischkammer düsenartig verjüngt sind. Auf diese Weise gelangen die organische Reaktionsphase bzw. das Abbruchmittel unter höherer Geschwindigkeit in die Mischkammer. Die Komponenten vermischen sich nicht nur durch das plötzliche Aufeinandertreffen, sondern durch einen Wirbeleffekt, der durch ihre Strömung selbst erzeugt wird. Außerdem durchfließen die Komponenten die Mischkammer noch schneller und es wird insgesamt eine schnellere Durchmischung erreicht.

Im Allgemeinen führt man 0,05 bis 0,8 Gewichtsteile, vorzugsweise 0,2 bis 0,6 Gewichtsteile Abbruchmittel, bezogen auf einen Gewichtsteil organische Reaktionsphase über die Eintrittsöffnung direkt in die Zirkulationsströmung des Mischraum ein. Zusammen mit der getrennt zugeführten organischen Reaktionsphase erhält man eine Feindispersion, wobei mit der vorgenannten Menge des Abbruchmittels dieses im Allgemeinen als disperse Phase vorliegt.

Erfindungsgemäß wird das Abbruchmittel in Form von Tröpfchen eines mittleren durchmessers von mehr als 3 µm bis 200 µm, vorzugsweise mehr als 50 µm bis 100 µm in der Mischkammer dispergiert, während die organische Phase die zusammenhängende Phase bildet.

Der mit einem drehzahlregelbaren Antrieb ausgestattete Mischrotor wird abhängig vom Durchsatz der Mischer- und Rotorgeometrie so betrieben, dass die Energiedichte vorzugsweise mehr als 3 x 10⁵ J/m³, insbesondere 5 bis 6 x 10⁵ J/m³ beträgt. Die Bestimmung der Energiedichte kann z. B. über die an der Welle abgenommene Leistung erfolgen.

Das wässrige Abbruchmittel kann gelöste Substanzen, wie Mineralbasen, z. B. Alkalimetall- oder Erdalkalimetallhydroxide, -carbonate, Ammoniak oder Säuren, wie Salzsäure etc., enthalten. Da jedoch damit in der Regel kein weitergehender Vorteil verbunden ist, enthält das Abbruchmittel vorzugsweise keine nennenswerten Mengen gelöster Substanzen. Leitungs- oder Flusswasser ist geeignet. Im Allgemeinen wird aber entmineralisiertes Wasser bevorzugt, das z. B. in Form von Heißdampfkondensat zur Verfügung steht. Der pH-Wert liegt im Allgemeinen im Bereich von 6 bis 10.

Die Temperatur des Abbruchmittels ist an sich nicht kritisch. Damit sich beim Kontakt mit der organischen Reaktionsphase, die üblicherweise eine Temperatur von weniger als 0 °C aufweist, keine Eiskristalle bilden, die die Funktion des dynamischen Mischers beeinträchtigen, wird das Abbruchmittel vorzugsweise vorerwärmt. Das Abbruchmittel weist typischerweise eine Temperatur von 35 bis 150 °C auf. Temperaturen von mehr als 100 °C erfordern, dass das Wasser bei einem Druck gehalten wird, der höher als Umgebungsdruck ist.

Die organische Reaktionsphase weist zum Zeitpunkt des Einführens in die Umfangswand des Mischers im wesentlichen Reaktionstemperatur auf, d. h. sie wird nach Erreichen des gewünschten Polymerisationsgrades nicht erwärmt, bevor der Kontakt mit dem zirkulierenden Abbruchmittel in der Mischkammer erfolgt, wobei der Katalysator nahezu schlagartig deaktiviert wird.

Durch das Inkontaktbringen der organischen Reaktionsphase mit dem Abbruchmittel weist die erhaltene Dispersion vorzugsweise Temperaturen von 5 bis 50 °C, insbesondere 10 bis 45 °C, auf.

Die aus dem Mischer austretende Dispersion wird zur Abtrennung der dispergierten Wassertropfen in ein Beruhigungsgefäß geleitet. Die Phasentrennung geschieht zweckmäßigerweise in einem liegenden Phasentrenngefäß, das mit geringer Strömungsgeschwindigkeit durchflossen wird. Bedingt durch den Dichteunterschied der koexistierenden Phasen trennt sich die spezifisch schwerere, wässrige Phase als Unterphase von der organischen Phase. Beide Phasen liegen am Austritt des Phasentrenngefäßes weitgehend fremdphasenfrei übereinander geschichtet vor.

Zur Abscheidung von nicht spontan koaleszierenden Tropfen der wässrigen Phase können koaleszenzfördende Einbauten in das Phasentrenngefäß eingebaut werden. Eine vollständige Abscheidung nicht koaleszierter Tropfen aufgrund der Dichtedifferenz erfordert erfahrungsgemäß eine sehr lange Verweilzeit, wodurch eine wirtschaftliche Antrennung nicht möglich ist.

Bei den koaleszenzfördernden Einbauten handelt es sich um Füllkörper, Koaleszenzflächen oder feinporige Einbauten.

Als Füllkörper sind die üblicherweise bei der Destillation verwendeten Füllkörperschüttungen geeignet. Vorzugsweise leitet man die gesamte Dispersion durch die Füllkörperschüttung. Durch die Benetzung der großen Füllkörperoberfläche kommt es aufgrund von Oberflächenkoaleszenz und gleichzeitig durch Tropfen-Tropfen-Koaleszenz. zur Bildung größerer Tropfen die dann problemlos im Erdschwerefeld abgeschieden werden.

Bei den Koaleszenzflächen handelt es sich im Allgemeinen um geordnete Plattenpakete, die als gewellte oder schräg gestellte Flächen ausgeführt werden, an denen sich dispergierte Tröpfchen anlagern, dann einen Film bilden, bei entsprechender Filmdicke als große Tropfen an der jeweiligen Plattenkante abreißen und sich dann problemlos abscheiden.

Noch verbleibende sehr feine Tropfen der wässrigen Phase können wirtschaftlich in einem nachgeschalteten Phasentrenngefäß mittels feinporiger Koaleszenzeinbauten, sog. Koaleszierfilter, die in Form von Filterkerzen ausgeführt sind, koalesziert und dann wie bei den vorgenannten Koaleszenzmaßnahmen als größere Tropfen problemlos abgeschieden werden. Bei den vorgenannten feinporigen Koaleszenzeinbauten zwingt die innere Struktur die fein dispergierten Tropfen zum Kontakt mit sich selbst und mit der inneren Oberfläche des Filters.

Vor der weiteren destillativen Aufarbeitung der fremdphasenfreien organischen Phase, wird diese vorteilhafter Weise einer Wäsche mit Wasser unterzogen, wodurch gelöste Katalysatordeaktivierungsprodukte und Nebenprodukte extraktiv abgetrennt werden.

Es hat sich als vorteilhaft verwiesen, die extraktive Reinigung der organischen Phase mit der Feinsttropfenabscheidung zu verknüpfen. Hierzu wird vor der nachgeschalteten Koaleszenzmaßnahme die organische Phase mit einer Wassermenge versetzt, wozu erfahrungsgemäß 0,01 bis 0,1 Gewichtsteile bezogen auf die organische Phase ausreichen. Als Extraktionsmittel ist entmineralisiertes Wasser bevorzugt.

Die Aufarbeitung der von der wässrigen Phase befreiten organischen Phase zur Isolierung des gewünschten Polyisobutens erfolgt in üblicher Weise. Das Polyisobuten wird, in der Regel destillativ, von nicht umgesetztem Isobuten, inertem Verdünnungsmittel und gegebenenfalls Isobutenoligomeren befreit und fällt als Destillationsrückstand, z. B. als Sumpfprodukt einer Destillationskolonne, an.

Die Polymerisation von Isobuten ist an sich bekannt; sie kann kontinuierlich oder diskontinuierlich erfolgen, erfolgt jedoch vorzugsweise kontinuierlich. Verfahren zur kontinuierlichen Polymerisation in Gegenwart von Lewissäure-Katalysatoren in flüssiger organischer Phase sind an sich bekannt. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien, hier Isobuten bzw. Isobuten-haltiger Zulauf, wird dem Polymerisationsreaktor kontinuierlich zugeführt. Das Verhältnis von der im Polymerisationsreaktor befindlichen Stoffmenge zu der Menge, die ausgetragen wird, bestimmt sich durch das Umlauf/Zulauf-Verhältnis, das bei der kontinuierlichen Polymerisation von Isobuten zu Polyisobuten in der Regel im Bereich von 1000:1 bis 1:1, bevorzugt im Bereich von 500:1 bis 5:1 und insbesondere im Bereich von 50:1 bis 200:1 liegt. Die mittlere Verweildauer des zu polymerisierenden Isobutens im Polymerisationsreaktor kann fünf Sekunden bis mehrere Stunden betragen. Verweilzeiten von 1 bis 30 Minuten, insbesondere 2 bis 20 Minuten, sind besonders bevorzugt.

Die Polymerisation des Isobutens erfolgt in den üblichen Reaktoren, wie Rührkessel, Rohr-, Rohrbündel- und Schlaufenreaktoren, wobei Schlaufenreaktoren, d. h. Rohr(bündel)reaktoren mit Rührkesselcharakteristik, bevorzugt sind. Besonders günstig sind Rohrreaktoren mit Rohrquerschnitten, die in Teilbereichen zu Turbulenzen führen.

Die Polymerisation wird bei einer Reaktionstemperatur von -60 bis -4 °C, insbesondere -25 bis -5 °C, durchgeführt. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuführen, ist die Siedekühlung. Dabei wird die freiwerdende Wärme durch teilweises Verdampfen des Reaktionsgemischs, z. B. des Isobutens und/oder anderer leicht flüchtiger Bestandteile des Isobutenzulaufs oder eines leicht flüchtigen Verdünnungsmittels, abgeführt. Vorzugsweise arbeitet man unter isothermen Bedingungen, d. h. die Temperatur der flüssigen organischen Reaktionsphase im Polymerisationsreaktor hat einen stationären Wert und ändert sich während des Betriebs des Reaktors nicht oder nur in geringem Maße.

Die Konzentration des Isobutens in der flüssigen Reaktionsphase liegt in der Regel im Bereich von 0,2 bis 50 Gew.%, vorzugsweise im Bereich von 0,5 bis 35 Gew.-%, bezogen auf die flüssige organische Phase. Sie ist unter anderem abhängig vom angestrebten Molekulargewicht des herzustellenden Polyisobutens.

Als Einsatzstoffe eignen sich sowohl Isobuten selbst als auch Isobuten-haltige C₄-Kohlenwasserstoffströme, beispielsweise C₄-Raffinate, C₄-Schnitte aus der Isobutan-Dehydrierung, C₄-Schnitte aus Steamcrackern, FCC-Crackern (fluid catalysed cracking), sofern sie weitgehend von darin enthaltenem 1,3-Butadien befreit sind. Geeignete C₄-Kohlenwasserstoffströme enthalten in der Regel weniger als 500 ppm, vorzugsweise weniger als 200 ppm, Butadien. Die Anwesenheit von 1-Buten, cis- und trans-2-Buten ist weitgehend unkritisch. Typischerweise liegt die Isobutenkonzentration in den C₄-Kohlenwasserstoffströmen im Bereich von 40 bis 60 Gew.-%. Bei Einsatz von C₄-Schnitten als Einsatzmaterial übernehmen die von Isobuten verschiedenen Kohlenwasserstoffe die Rolle eines inerten Verdünnungsmittels, wie nachstehend erläutert wird. Der Isobuten-haltige Zulauf kann geringe Mengen an Kontaminanten, wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien, wie Aktivkohle, Molekularsiebe oder Ionenaustauscher, aus dem Isobuten-haltigen Zulauf entfernt.

Aufgrund der hohen Viskosität von Polyisobuten ist es vorteilhaft, die Polymerisation in Gegenwart eines inerten Verdünnungsmittels durchzuführen. Das verwendete inerte Verdünnungsmittel sollte geeignet sein, die während der Polymerisationsreaktion zu beobachtende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise gesättigte Kohlenwasserstoffe, wie Butan, Pentan, Hexan, Heptan, Octan, z. B. n-Hexan, i-Octan, Cyclopentan, halogenierte Kohlenwasserstoffe, wie Methylchlorid, Dichlormethan oder Trichlormethan, sowie Mischungen der vorgenannten Verdünnungsmittel, wovon n-Hexan besonders bevorzugt ist. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien, wie Aktivkohle, Molekularsiebe oder Ionenaustauscher.

Die BF₃-Konzentration im Reaktor liegt in der Regel im Bereich von 0,005 bis 1 Gew.-%, bezogen auf die flüssige Reaktionsphase, insbesondere im Bereich von 0,01 bis 0,7 Gew.-% und speziell im Bereich von 0,02 bis 0,5 Gew.-%.

Die Bortrifluorid-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden.

Eine andere, bevorzugte Variante besteht darin, dass man die Bortrifluorid-Komplexe in situ in der Polymerisationsapparatur oder einem Zulauf erzeugt. Bei dieser Verfahrensweise wird der jeweilige Cokatalysator gegebenenfalls gemeinsam mit einem Lösungsmittel in die Polymerisationsapparatur oder den Zulauf eingespeist und Bortrifluorid in der erforderlichen Menge in dieser Mischung der Reaktanten dispergiert. Hierbei setzt sich das Bortrifluorid und der Cokatalysator zum Bortrifluorid-Komplex um. Anstelle eines zusätzlichen Lösungsmittels kann bei der in situ-Erzeugung des Bortrifluorid-Katalysator-Komplexes die Reaktionsmischung aus nicht umgesetztem Isobuten und Polyisobuten als Lösungsmittel fungieren.

Bei dem Lewissäure-Katalysator handelt es sich vorzugsweise um einen Katalysator auf BF₃-Basis bzw. einen BF₃-Komplexkatalysator. Diese enthalten neben BF₃ meist einen oder mehrere Cokatalysatoren.

Bortrifluorid wird zweckmäßigerweise in Form von gasförmigem Bortrifluorid eingesetzt, wobei technisches, noch geringe Mengen Schwefeldioxid und SiF₄ enthaltendes, vorzugsweise aber hochreines Bortrifluorid mit einer Reinheit von etwa 99,5 Gew.-% verwendet werden kann.

Bei den Cokatalysatoren kann es sich zu einen um Verbindungen mit einem abstrahierbaren Wasserstoffatom handeln. Sie werden als "Starter" bezeichnet, weil ihr aktives Wasserstoffatom am Anfang der wachsenden Polyisobutenkette eingebaut wird. Daneben eignen sich tert-Butylether, wie tert-Butylmethylether, die leicht ein tert-Butylkation bilden, Phenole, wie Phenol oder Kresole, oder Halogenkohlenwasserstoffe, wie Dichlormethan oder Trichlormethan. Als Cokatalysatoren sind beispielsweise Wasser, Methanol, Ethanol, 2-Propanol, 1-Propanol, 2-Butanol, sec-Pentanol, sec-Hexanol, sec-Heptanol und/oder sec-Octanol geeignet. Davon sind Methanol und 2-Propanol am meisten bevorzugt.

Vorzugsweise beträgt das Molverhältnis von Bortrifluorid zu Cokatalysator 1:1 bis 1:10, insbesondere 1:1,1 bis 1:5 und besonders bevorzugt 1:1,2 bis 1:2,5.

Die Konzentration des Komplexes von Bortrifluorid und Cokatalysator im Reaktor liegt in der Regel im Bereich von 0,01 bis 1 Gew.%, bezogen auf die flüssige organische Phase, insbesondere im Bereich von 0,02 bis 0,7 Gew.-% und besonders bevorzugt im Bereich von 0,03 bis 0,5 Gew.-%.

Nach Erreichen des gewünschten Polymerisationsgrads wird die im Wesentlichen Reaktionstemperatur aufweisende organische Phase wie beschrieben mit dem Abbruchmittel behandelt.

Das erfindungsgemäße Verfahren eignet sich im Allgemeinen zur Herstellung von Polyisobutenen mit einem zahlenmittleren Molekulargewicht von 500 bis 100 000, die vorzugsweise durch einen hohen Gehalt an Methylidengruppen und/oder eine geringe Dispersität gekennzeichnet sind.

Der Ausdruck "Gehalt an Methylidengruppen" bezieht sich auf den prozentualen Anteil von Polyisobutenmolekülen mit Methylidengruppe, bezogen auf die Zahl aller olefinisch ungesättigten Polyisobutenmoleküle in einer Probe. Er kann durch ¹H-NMR- und/oder ¹³C-NMR-Spektroskopie ermittelt werden, wie dem Fachmann geläufig ist.

Dispersität (Einheitlichkeit der Molekulargewichtsverteilung) ist als Quotient des gewichtsmittleren Molekulargewichts M_{w} und des zahlenmittleren Molekulargewichts M_{N} definiert.

Das Verfahren ist besonders geeignet zur Herstellung von Polyisobutenen mit einem zahlenmittleren Molekulargewicht von 500 bis 10 000, einem Gehalt an Methylidengruppen von mehr als 60 Mol% und einer Dispersität von 1,5 bis 3.

Es ist außerdem besonders geeignet zur Herstellung von Polyisobutenen mit einem zahlenmittleren Molekulargewicht von 10 000 bis 60 000 und einer Dispersität von 1,5 bis 3,2.

Es ist außerdem besonders geeignet zur Herstellung von Polyisobutenen mit einem zahlenmittleren Molekulargewicht von 60 000 bis 100 000 und einer Dispersität von 2 bis 5.

Die Erfindung wird durch die beigefügte Zeichnung und nachfolgenden Beispiele und Vergleichsbeispiele näher veranschaulicht.

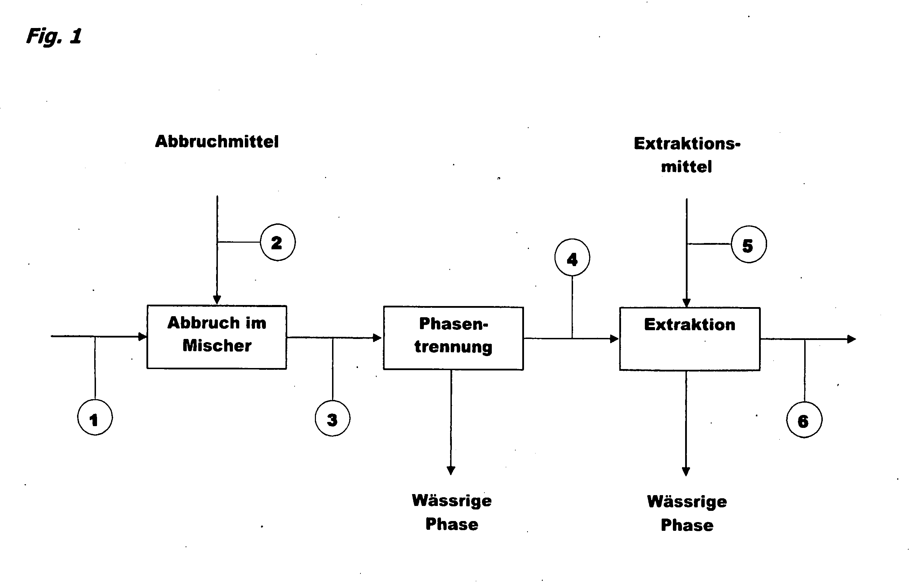

Fig. 1 zeigt schematisch den Gang der Aufarbeitung des Reaktionsaustrages der Isobutenpolymerisation. Bei dem mit "1" gekennzeichneten Strom handelt es sich um die organische Reaktionsphase, die im Wesentlichen aus Polyisobuten, nicht umgesetzten Isobuten, inertem Verdünnungsmittel und Katalysator besteht. Die Reaktionsphase wird in einem Mischer mit dem Abbruchmittel (das mit "2" gekennzeichnet ist) in innigen Kontakt gebracht, wobei der Katalysator deaktiviert und die anfallenden Katalysatordeaktivierungsprodukte gleichzeitig in die wässrige Phase extrahiert werden. Der mit "3" gekennzeichnete gemischtphasige Strom wird einer Phasentrennung unterworfen; die wässrige Phase wird abgetrennt. Die mit "4" gekennzeichnete organische Phase wird einer weiteren Wäsche mit einem vorzugsweise wässrigen Extraktionsmittel (das mit "5" gekennzeichnet ist) unterworfen. Aus der mit "6" gekennzeichneten Polyisobutenlösung werden das nicht umgesetzte Isobuten und das inerte Verdünnungsmittel abdestilliert, um das Endprodukt zu erhalten.

### Beispiele 1 bis 3 (erfindungsgemäß)

Ein Isobuten-haltiger Zulauf wurde auf der Saugseite eines Schlaufenreaktors zugeführt, der mit einer integrierten Umwälzpumpe ausgestattet war. Als Katalysator wurden Bortrifluord und als Cokatalysator Isopropanol in getrennten Strömen zugeführt. Der Reaktor wurde so gekühlt, dass die Temperatur im Reaktionsmedium - 15 °C betrug. Die (Co)Katalysatormenge und die mittlere Verweilzeit im Reaktor wurden so geregelt, dass man nieder- bzw. mittelmolekulares Polyisobuten des in der nachstehenden Tabelle angegebenen Molekulargewichts erhielt. Als Isobuten-haltiger Zulauf wurde zum einen ein Gemisch von etwa 50 Gew.-% Isobuten und 50 Gew.-% Hexan ("Rein-Isobuten"), zum anderen Isobuten enthaltendes Raffinat 1 (ca. 40 % Isobuten, 60 % 1-Buten, 2-Butene, n-Butan und Isobutan in unterschiedlichen Konzentrationen) verwendet.

Der Reaktoraustrag, bestehend aus dem jeweiligen Polymer, Restisobuten, inertem Lösungsmittel und dem Bortrifluoridkomplex wurde zwecks Abbruch der Reaktion direkt mit Reaktionstemperatur in die Umfangswand eines dynamischen Mischers gemäß DE-A 42 20 239 bei einer Mischrotordrehzahl von 1500 U/min eingespeist. Das als Abbruchmittel verwendete Heißkondensat wurde getrennt über die Umfangswand direkt in die Zirkulationsströmung der Mischkammer zugeführt. Die aus der Mischvorrichtung anfallende Dispersion wurde im einem liegenden Phasentrenngefäß getrennt. Die anschließende Wäsche mittels Heißkondensat wurde mit der Abtrennung feinster Wassertröpfchen verbunden, wobei die Dispersion unter Zuhilfenahme eines Koaleszierfilters getrennt wurde.

Die Stromdaten und Qualitätsmerkmale des Produktes sind in der nachstehenden Tabelle angegeben, in der sich die Bezeichnungen "Strom 1" usw. auf die in der Fig. 1 dargestellten Ströme beziehen.

### Beispiele 4 und 5 (Vergleichsbeispiele)

Im Gegensatz zu den vorgenannten Beispielen wurde anstelle des dynamischen Mischers ein statischer Mischer (Fabrikat SULZER) eingesetzt, wobei die organische Reaktionsphase und das Abbruchmittel am Eintritt des statischen Mischer zusammengeführt wurden und erst durch die fortschreitende Dispergierung längs des Mischrohres der Reaktionsabbruch erfolgte. Die nach Abbruch und Phasentrennung gewonnene Polymerlösung enthält hohe Fluorgehalte von 195 bzw. 287 mg/kg. Auch nach zwei anschließenden Extraktionsschritten konnte nach der Feinsttropfenabscheidung im Koaleszierfilter der Katalysatorkomplex nur unvollständig abgetrennt werden.

### Beispiel 6 (Vergleichsbeispiel)

In einer apparativen Anordnung, wie im Beispiel 4 und 5 beschrieben, mit statischem Mischer wurde versuchsweise auch die Herstellung von Polyisobuten mit mittleren Molekulargewichten 10 000 und 15 000 Dalton untersucht. Hierzu wurden im Vorfeld die Reaktionsbedingungen (Reaktionstemperatur, Zusammensetzung des Reaktionsgemisches und Katalysatormenge) auf die hohen Molekulargewichte abgestimmt. Der Reaktoraustrag bestand aus dem jeweiligen Polymer, etwa 25 % Restisobuten, etwa 55 % inertem Lösungsmittel und dem Bortrifluoridkomplex. Die Dispersität der erhaltenen Polymere lag bei etwa 7.

### Beispiel 7 (erfindungsgemäß)

Der Reaktoraustrag entsprechend Beispiel 6 wurde zwecks Abbruch der Reaktion direkt in die Umfangswand eines dynamischen Mischers gemäß DE-A 42 20 239 eingespeist. Das als Abbruchmittel verwendete Heißkondensat mit einer Temperatur von 70 °C wurde im Verhältnis 0,2 bis 06 kg/kg über die zweite Eintrittsöffnung in der Umfangswand zugeführt. Die aus der Dispergiereinrichtung anfallende Dispersion mit einer Temperatur von 25 °C wurde in einer Phasentrenneinrichtung unter Zuhilfenahme eines Koaleszierfilters in die klare Polymerlösung und Wasserphase getrennt.
Trotz des hohen Molekulargewichtes des Polymers und des hohen Restisobutengehaltes konnte das Fluor ohne zusätzliche Extraktion auf Restgehalte von 8-10 mg/kg und das Tertiärbutanol auf Restgehalte von ca. 10 mg abgetrennt werden. Im Gegensatz zu Beispiel 6 wurde eine niedrige und damit spezifikationsgerechte Dispersität von 2,5 erreicht. Die Polymerlösung kann ohne zusätzliche Extraktionsschritte direkt der weiter verarbeitet werden. Nach den vorliegenden Erfahrungen treten bei der weiteren Aufarbeitung der Polymerlösung keine Korrosionsprobleme wie bei den Beispielen 4 und 5 auf.

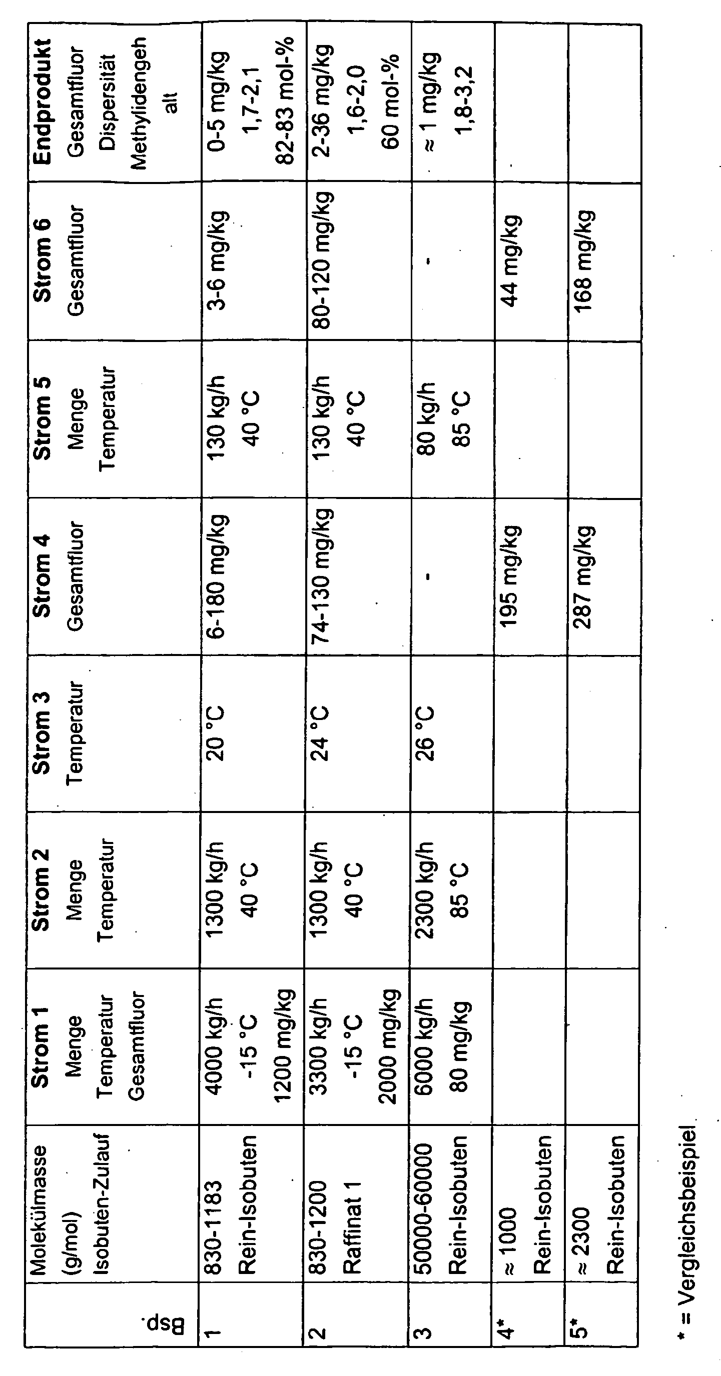

## Patentansprüche

1. Verfahren zur Herstellung von Polyisobutenen, bei dem man
a) Isobuten in Gegenwart eines Lewissäure-Katalysators in flüssiger organischer Phase polymerisiert,
b) die organische Phase zum Reaktionsabbruch in einem dynamischen Mischer mit einem wässrigen Abbruchmittel versetzt, der eine aus einer Umfangswand und zwei Stirnwänden gebildete, rotationssymmetrische Mischkammer und einen darin drehangetriebenen Mischrotor aufweist, wobei man die organische Phase über eine erste in der Umfangswand vorgesehene Einlassöffnung und das wässrige Abbruchmittel über eine zweite in der Umfangswand vorgesehene Einlassöffnung einführt, und
c) über eine in der Umfangswand vorgesehene Auslassöffnung ein fein dispergiertes Gemisch der organischen Phase und des Abbruchmittels abzieht und einer Phasentrennung zuführt.

2. Verfahren nach Anspruch 1, wobei die zweite Einlassöffnung in Drehrichtung des Rotors versetzt zur ersten Einlassöffnung angeordnet ist.

3. Verfahren nach Anspruch 2, wobei der Mischrotor an seinem Umfang gleichmäßig beabstandete Schaufeln aufweist.

4. Verfahren nach Anspruch 3, wobei der Mischrotor an seinen Stirnseiten Ausnehmungen aufweist, die durch radiale Stege voneinander getrennt sind, und die Mischkammer an ihren Stirnwänden ringförmige Kanäle aufweist.

5. Verfahren nach einem der vorhergehenden Ansprüche, wobei der Lewissäure-Katalysator ein Komplex von Bortrifluorid und wenigstens eines Cokatalysators ist.

6. Verfahren nach einem der vorhergehenden Ansprüche, wobei man 0,05 bis 0,8, vorzugsweise 0,2 bis 0,6, Gewichtsteile Abbruchmittel, bezogen auf einen Gewichtsteil organische Phase, einführt.

7. Verfahren nach einem der vorhergehenden Ansprüche, wobei in dem aus der Auslassöffnung des Mischers austretenden Gemisch das Abbruchmittel als disperse Phase vorliegt.

8. Verfahren nach Anspruch 7, wobei das Abbruchmittel in Form von Tröpfchen eines mittleren Durchmessers von mehr als 3 µm bis 200 µm vorliegt.

9. Verfahren nach einem der vorhergehenden Ansprüche, wobei die Energiedichte zur Dispergierung des Abbruchmittels mehr als 3 x 10⁵ J/m³ beträgt, vorzugsweise 5 bis 6 x 10⁵ J/m³.

10. Verfahren nach einem der vorhergehenden Ansprüche, wobei der Mischrotor mit einer Drehzahl von 500 bis 3000 pro Minute rotiert.

11. Verfahren nach einem der vorhergehenden Ansprüche, wobei man in Schritt a) polymerisiert, bis ein Polyisobuten mit einem zahlenmittleren Molekulargewicht von 500 bis 100 000 erhalten ist.

12. Verfahren nach Anspruch 11, wobei das Polyisobuten ein zahlenmittleres Molekulargewicht von 500 bis 10 000, einen Gehalt an endständigen Doppelbindungen von mehr als 60 Mol-% und eine Dispersität von 1,5 bis 3 aufweist.

13. Verfahren nach Anspruch 11, wobei das Polyisobuten ein zahlenmittleres Molekulargewicht von 10 000 bis 60 000 und eine Dispersität von 1,5 bis 3,2 aufweist.

14. Verfahren nach Anspruch 11, wobei das Polyisobuten ein zahlenmittleres Molekulargewicht von 60 000 bis 100 000 und eine Dispersität von 2 bis 5 aufweist.

## Claims

1. A process for preparing polyisobutenes by
a) polymerizing isobutene in the presence of a Lewis acid catalyst in liquid organic phase,
b) terminating the reaction by admixing the organic phase with an aqueous terminator in a dynamic mixer which has a rotationally symmetric mixing chamber formed from one circumferential wall and two end walls, and a mixing rotor driven such that it rotates therein, the organic phase being introduced through a first inlet orifice provided in the circumferential wall and the aqueous terminator via a second inlet orifice provided in the circumferential wall, and
c) removing a finely dispersed mixture of the organic phase and of the terminator through an outlet orifice provided in the circumferential wall and feeding it to a phase separation.

2. The process according to claim 1, wherein the second inlet orifice is arranged offset with respect to the first inlet orifice in the direction of rotation of the rotor.

3. The process according to claim 2, wherein the mixing rotor has paddles spaced apart uniformly on its circumference.

4. The process according to claim 3, wherein the mixing rotor has, on its end sides, cutouts which are separated from one another by radial bars, and the mixing chamber has annular channels on its end walls.

5. The process according to any of the preceding claims, wherein the Lewis acid catalyst is a complex of boron trifluoride and at least one cocatalyst.

6. The process according to any of the preceding claims, wherein from 0.05 to 0.8, preferably from 0.2 to 0.6, part by weight of terminator, based on one part by weight of organic phase, is introduced.

7. The process according to any of the preceding claims, wherein the terminator is present as a disperse phase in the mixture which exits from the outlet orifice of the mixer.

8. The process according to claim 7, wherein the terminator is present in the form of droplets of mean diameter of from more than 3 µm to 200 µm.

9. The process according to any of the preceding claims, wherein the energy density to disperse the terminator is more than 3 x 10⁵ J/m³, preferably from 5 to 6 x 10⁵ J/m³.

10. The process according to any of the preceding claims, wherein the mixing rotor rotates with a speed of from 500 to 3000 per minute.

11. The process according to any of the preceding claims, wherein polymerization is effected in step a) until a polyisobutene having a number-average molecular weight of from 500 to 100 000 is obtained.

12. The process according to claim 11, wherein the polyisobutene has a number-average molecular weight of from 500 to 10 000, a content of terminal double bonds of more than 60 mol% and a dispersity of from 1.5 to 3.

13. The process according to claim 11, wherein the polyisobutene has a number-average molecular weight of from 10 000 to 60 000 and a dispersity of from 1.5 to 3.2.

14. The process according to claim 11, wherein the polyisobutene has a number-average molecular weight of from 60 000 to 100 000 and a dispersity of from 2 to 5.

## Revendications

1. Procédé pour la préparation de polyisobutènes, dans lequel
a) on polymérise de l'isobutène en présence d'un catalyseur de type acide de Lewis en phase organique liquide,
b) pour interrompre la réaction on ajoute un agent aqueux de terminaison de réaction à la phase organique dans un mélangeur dynamique qui comporte une chambre de mélange à symétrie de révolution, constitué d'une paroi périphérique et de deux parois aux extrémités, et un rotor de mélange entraîné en rotation dans celle-ci, en introduisant la phase organique par un premier orifice d'entrée prévu dans la paroi périphérique et l'agent aqueux de terminaison de réaction par un deuxième orifice d'entrée prévu dans la paroi périphérique, et
c) on évacue par un orifice de sortie prévu dans la paroi périphérique un mélange finement dispersé de la phase organique et de l'agent de terminaison de réaction on l'envoie à une séparation de phases.

2. Procédé selon la revendication 1, dans lequel le deuxième orifice d'entrée est disposé en étant décalé par rapport au premier orifice d'entrée, dans le sens de rotation du rotor.

3. Procédé selon la revendication 2, dans lequel le rotor de mélange présente à sa périphérie des pales régulièrement espacées.

4. Procédé selon la revendication 3, dans lequel le rotor de mélange présente sur ses parois aux extrémités des évidements qui sont séparés les uns des autres par des nervures radiales, et la chambre de mélange présente des canaux annulaires sur ses parois aux extrémités.

5. Procédé selon l'une quelconque des revendications précédentes, dans lequel le catalyseur de type acide de Lewis est un complexe de trifluorure de bore et d'au moins un co-catalyseur.

6. Procédé selon l'une quelconque des revendications précédentes, dans lequel on introduit de 0,05 à 0,8, de préférence de 0,2 à 0,6 partie en poids d'agent de terminaison de réaction, par rapport à une partie en poids de phase organique.

7. Procédé selon l'une quelconque des revendications précédentes, dans lequel l'agent de terminaison de réaction est présent sous forme de phase dispersée dans le mélange sortant de l'orifice de sortie du mélangeur.

8. Procédé selon la revendication 7, dans lequel l'agent de terminaison de réaction se trouve sous forme de gouttelettes ayant un diamètre moyen de plus de 3 µm à 200 µm.

9. Procédé selon l'une quelconque des revendications précédentes, dans lequel la densité d'énergie pour la dispersion de l'agent de terminaison de réaction est de plus de 3 x 10⁵ J/m³, de préférence de 5 à 6 x 10⁵ J/m³.

10. Procédé selon l'une quelconque des revendications précédentes, dans lequel le rotor de mélange tourne à une vitesse de rotation de 500 à 3 000 tours par minute.

11. Procédé selon l'une quelconque des revendications précédentes, dans lequel on effectue la polymérisation dans l'étape a) jusqu'à l'obtention d'un polyisobutène ayant une masse moléculaire moyenne en nombre de 500 à 100 000.

12. Procédé selon la revendication 11, dans lequel le polyisobutène présente une masse moléculaire moyenne en nombre de 500 à 10 000, une teneur en doubles liaisons en bout de chaîne de plus de 60 % en moles et une polydispersité de 1,5 à 3.

13. Procédé selon la revendication 11, dans lequel le polyisobutène présente une masse moléculaire moyenne en nombre de 10 000 à 60 000 et une polydispersité de 1,5 à 3,2.

14. Procédé selon la revendication 11, dans lequel le polyisobutène présente une masse moléculaire moyenne en nombre de 60 000 à 100 000 et une polydispersité de 2 à 5.
